# EUROPEAN PATENT APPLICATION

(11) **EP 2 458 140 A1**
(43) Date of publication of application: **30.05.2012**
(21) Application number: 10193016.2
(22) Date of filing: 29.11.2010
(51) Int. Cl.: E21B 33/035

(54) **Monitoring a subsea well installation**

(71) Applicant: Vetco Gray Controls Limited, Bristol BS48 1BS (GB)
(72) Inventor: Clarke, Andrew Malcolm George, Nailse, Bristol BS48 2LN (GB)
(74) Representative: Emerson, Peter James

(57) **Abstract**

There is disclosed a method of monitoring a subsea installation comprising: providing data storage means (11) in a subsea control module (5) and storing data resulting from the monitoring of equipment of the installation in the storage means.

## Description

### Field of the Invention

The present invention relates to monitoring a subsea well installation, such as a hydrocarbon production well installation.

### Background of the Invention

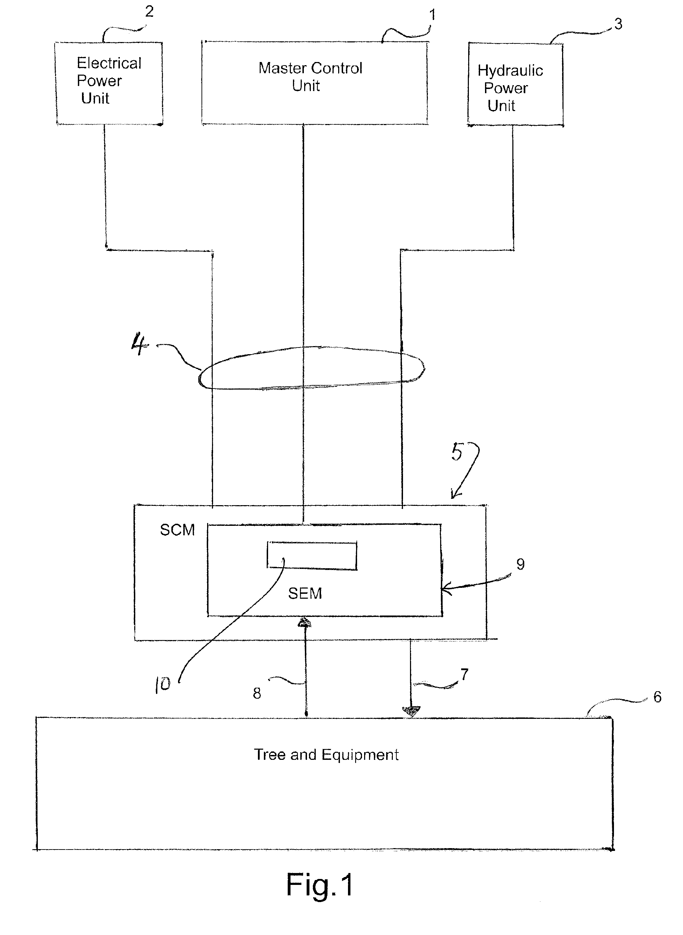

Fig. 1 shows the typical system configuration of a subsea hydrocarbon extraction well installation. The configuration comprises the following.

A master control unit (MCU) 1, an electrical power unit 2 and a hydraulic power unit 3, all of which may be installed on a rig, floating platform or onshore. The MCU 1 provides an operator interface with items of subsea equipment, and displays the current states of such equipment and sensor information, enabling the operator to control the system. It also enables trend analysis to be carried out and historical reports to be generated. The MCU 1 collates data such as the operational states of all subsea valves and data relating to the state of production flow into and across an entire hydrocarbon extraction field for example. Electrical and hydraulic power is provided for the items of subsea equipment by units 2 and 3.

An umbilical cable 4 which connects the above units to items of equipment installed on the sea bed (and usually mounted on a Christmas tree 6), the umbilical 4 carrying communication links.

A subsea control module (SCM) 5 installed on the Christmas tree 6, the SCM 5 controlling all the subsea control processes, providing hydraulic power on a line 7 to actuate valves mounted on the Christmas tree 6 and at the wellhead. It also receives process instrumentation signals on a line 8 from sensors mounted on the Christmas tree and at the wellhead, the signals being received and processed in a subsea electronics module (SEM) 9 in the SCM 5.

The subsea equipment has to be reliable and operate in the harsh environment subsurface and ensure satisfactory operation over life of up to 25 years, for example. Knowledge of the states of items of equipment is required in order to achieve satisfactory performance and to reconfigure or replace equipment where performance is deteriorating, before major faults occur which require the system to be shut down. For this purpose, instrumentation is built into the subsea equipment to monitor all the operational states of pieces of equipment, in the form of a health or condition monitoring circuitry 10 on a circuit board or card in the SEM 9.

In current systems, all the above information is collected by the SCM 5 and transmitted to the MCU 1 via a communication link in the umbilical cable 4. At the MCU 1, the information is analysed and stored in a customer database. The historical information concerning the SCM 5 itself and other subsea equipment is also embedded in this database alongside commercially sensitive customer information, and consequently is not easily extracted or made available by the customer to the SCM supplier and/or maintainer. This data is essential for diagnosing faults in an SCM and other subsea equipment for finding the basic cause of such faults. An alternative method of obtaining such data is required.

### Summary of the Invention

According to the present invention from one aspect, there is provided a method of monitoring a subsea well installation, comprising:
providing data storage means in a subsea control module of the installation; and
storing data from the monitoring of equipment of the installation in the storage means.

According to the present invention from another aspect, there is provided a subsea well installation comprising a subsea control module in which is provided data storage means, the data storage means being adapted for storing data resulting from monitoring equipment of the installation.

Preferably, said data storage means is in a subsea electronics module of the subsea control module. In this case, the data storage means could be on a circuit board of the subsea electronics module which carries condition monitoring circuitry.

The data storage means could comprise a non-volatile memory.

The data storage means could be pre-configured with information identifying equipment being monitored.

The data could result from the monitoring of equipment of the subsea control module, such as at least one directional control valve of the subsea control module.

The data could result from the monitoring of equipment on a Christmas tree of the installation and/or sensors of the installation.

An embodiment of the invention results from providing built-in data storage means in the subsea control module of a subsea well installation, which data storage means is capable of storing all the relevant operational status and condition or health monitoring data relating to the subsea control module and all the Christmas tree mounted equipment. This enables the subsea control module to maintain its own historical log that is independent of the sensitive data held in the customer's master control unit database and is available whenever repairs have to be carried out by the manufacturer.

The invention effectively provides a "black box" function for subsea control equipment. Although the invention finds particular utility in the case of hydraulically activated subsea control, it is equally applicable to an all electric subsea control system.

### Brief description of the Drawings

Fig. 1 is a schematic diagram of the typical configuration of a subsea hydrocarbon extraction well installation; and
Fig. 2 is a schematic diagram of the configuration of Fig. 1 modified in accordance with an embodiment of the invention.

### Description of an Embodiment of the Invention

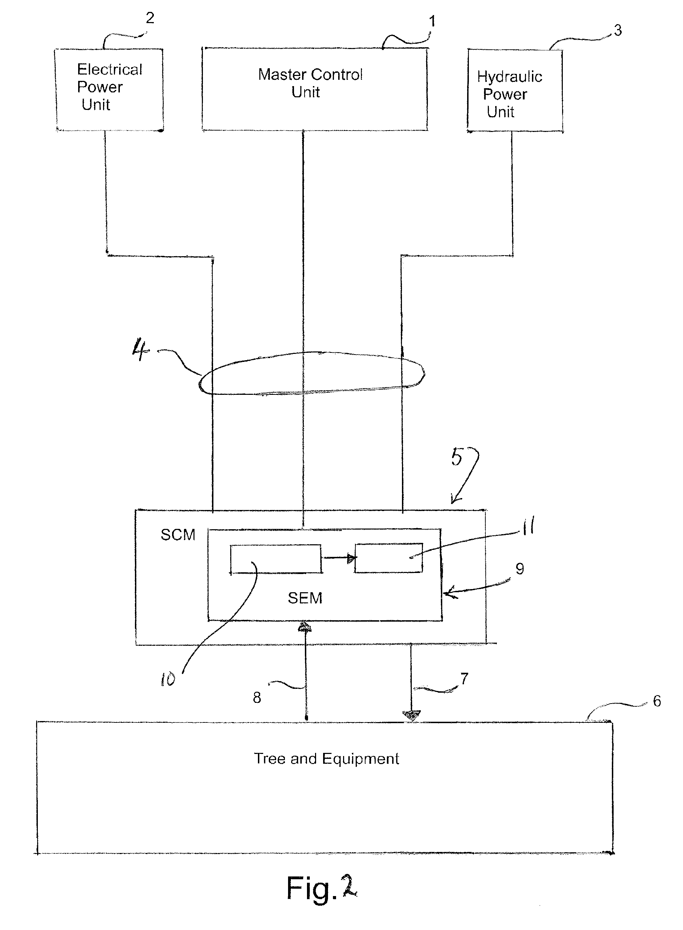

Referring to Fig. 2 and as stated above, the SCM 5 includes a subsea electronics module 9. The module 9 is microprocessor based and comprises several printed circuit boards or cards, with various functions such as communication with the MCU 1, interfacing with instrumentation and sensors and controlling valves and hydraulics. It also contains health or condition monitoring circuitry 10 on a circuit board or card, and in the embodiment of the present invention, a non-volatile memory 11 is included on the card as data storage means in communication with circuitry 10. The memory 11 provides a database which can be pre-configured with basic information identifying the serial numbers of the components of the SCM 5, such as printed circuit boards or cards and directional control valves (DCVs) and each component on the Christmas tree 6 and/or a manifold. These can be kept in separately partitioned parts of the database. The historical records in the storage means comprising data from the monitoring of equipment of the installation will include the status of various items of equipment throughout their operational life (such as each DCV).

Instead of receiving data from circuitry 10, the memory 11 could receive data for storage from software running on the SCM 5, such as "house-keeping" software.

In a basic embodiment, the data storage means 11 will receive data concerning the components and processes in the SCM 5 itself but it will be appreciated that the present invention may be used in respect of all of the items of subsea equipment with which the SCM 5 interfaces.

The data in the storage means 11 could be protected so that it cannot be tampered with.

### Advantages of using the Invention

The invention can automate and make readily available the collection of basic data on the cycles accumulated by items of subsea equipment associated with the control of Christmas tree infrastructure down to the level of actuators and valves.

By being included within the SCM itself, the database provided by the data storage means is physically decoupled from sensitive customer data within the MCU.

Health or condition monitoring has no control functionality and, as such, a customer can be assured that receiving data from it will be non-intrusive.

Data can be used by the well equipment supplier to assist diagnostic efforts, to facilitate collection of actuator usage measurements for example and therefore to produce more informed arguments and information for qualification criteria.

Information provided by the data storage means can also be shared with customers as part of their asset management programmes.

The invention can provide the critical input to populating "on-line" probabilistic reliability models - i.e. the data in the storage means could provide all the life usage data for a subsea well installation.

The storage means can provide an unambiguous record of how a subsea well installation had been operated. This could be particularly important following an incident where perhaps a floating platform, and the operational data carried in the MCU, was lost.

## Claims

1. A method of monitoring a subsea well installation comprising:
providing data storage means in a subsea control module of the installation; and
storing data resulting from the monitoring of equipment of the installation in the storage means.

2. A method according to claim 1, wherein said data storage means is in a subsea electronics module of the subsea control module.

3. A method according to claim 2, wherein said data storage means is on a circuit board which carries condition monitoring circuitry.

4. A method according to any preceding claim, wherein said data storage means comprises a non-volatile memory.

5. A method according to any preceding claim, wherein said data storage means is pre-configured with information identifying equipment being monitored.

6. A method according to any preceding claim, wherein said data results from the monitoring of at least one of: equipment on a Christmas tree of the installation; sensors of the installation; and equipment of the subsea control module.

7. A method according to claim 6, wherein said equipment of the subsea control module comprises at least one directional control valve.

8. A subsea well installation comprising a subsea control module in which is provided data storage means, the data storage means being adapted for storing data resulting from the monitoring of equipment of the installation.

9. An installation according to claim 8, wherein said data storage means is in a subsea electronics module of the subsea control module.

10. An installation according to claim 9, wherein said data storage means is on a circuit board which carries condition monitoring circuitry.

11. An installation according to any of claims 8 to 10, wherein said data storage means comprises a non-volatile memory.

12. An installation according to any of claims 8 to 11, wherein said data storage means is pre-configured with information identifying equipment being monitored.

13. A method according to any preceding claim, wherein said data results from the monitoring of at least one of: equipment on a Christmas tree of the installation; sensors of the installation; and equipment of the subsea control module.

14. A method according to claim 13, wherein said equipment of the subsea control module comprises at least one directional control valve.
